(19) Europäisches Patentamt
European Patent Office
Office européen des brevets

(11) **EP 2 837 832 A1**

(12) **EUROPEAN PATENT APPLICATION**

(43) Date of publication:
**18.02.2015 Bulletin 2015/08**

(51) Int Cl.:
*F15B 13/02* *(2006.01)*    *F16K 17/06* *(2006.01)*

(21) Application number: **14177006.5**

(22) Date of filing: **15.07.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **16.07.2013 JP 2013147586**

(71) Applicant: **Hitachi Construction Machinery Co., Ltd.**
**Bunkyo-ku,**
**Tokyo 112-8563 (JP)**

(72) Inventors:
• **Andou, Masakazu**
  **Tsuchiura-shi,, Ibaraki 300-0013 (JP)**

• **Yoshimoto, Mitsuhiro**
  **Tsuchiura-shi,, Ibaraki 300-0013 (JP)**
• **Ito, Hideaki**
  **Tsuchiura-shi,, Ibaraki 300-0013 (JP)**
• **Takiguchi, Kazuo**
  **Tsuchiura-shi,, Ibaraki 300-0013 (JP)**
• **Takao, Masaki**
  **Tsuchiura-shi,, Ibaraki 300-0013 (JP)**

(74) Representative: **MERH-IP**
**Matias Erny Reichl Hoffmann**
**Paul-Heyse-Strasse 29**
**80336 München (DE)**

(54) **Relief valve**

(57)    A spool valve body (18) has an axial one side provided with a pressure receiving part (18A), one side of which opens and the other side of which closes, for receiving pressures in said supply passage (13A), and a radial hole (18B) that radially communicates an inside and an outside of the pressure receiving part (18A). An annular gap (22) for the hydraulic oil to flow therein at the opening of the spool valve body (18) is formed between an inner peripheral surface of one side of the spool sliding bore (14A) adjacent to the displacement regulat-ing part (14B) and an outer periphery of the peripheral wall of the pressure receiving part (18A). At the opening of the spool valve body (18), a first oil passage (24) in which the hydraulic oil flows to the tank port (17) from the supply passage (13A) through the pressure receiving part (18A) and the radial hole (18B) and a second oil passage (25) in which the hydraulic oil flows to the tank port (17) through the axial gap (23) and the annular gap (22) between the displacement regulating part (14B) and the spool valve body (18), are formed.

Fig.1

EP 2 837 832 A1

## Description

TECHNICAL FIELD

The present invention relates to a relief valve used suitably for hydraulic equipment such as a construction machine. 0

BACKGROUND ART

In general, a construction machine as a typical example of a hydraulic excavator is provided with a relief valve for suppressing an excessive pressure leading to breakage, damage or the like of hydraulic equipment from being generated in a hydraulic circuit. This type of conventional relief valve is configured in such a manner as to open at generation of the excessive pressure for relieving the excessive pressure to a tank side. As to such a relief valve, there is known a relief valve in which, by providing a spool sliding bore in a valve casing and axially sliding/displacing a spool valve body provided to be inserted and fitted in the spool sliding bore, the excessive pressure is relieved to a tank side (Patent Documents 1, 2).

PRIOR ART DOCUMENTS

PATENT DOCUMENTS

Patent Document 1: Japanese Patent Laid-Open No. 2005-69352 A
Patent Document 2: Japanese Patent Laid-Open No. 2010-261366 A

SUMMARY OF THE INVENTION

Incidentally, the conventional relief valve as described above has a possibility that the following defect is caused by trap of foreign objects. That is, in some cases, for example, foreign objects composed of chips or abrasion powder by cutting work are mixed into a hydraulic oil (including a pressurized oil) flowing in the hydraulic circuit. These foreign objects are easily trapped between a displacement regulating part for positioning the spool valve body to a stroke end in a valve closing direction and an end of the spool valve body.

In a case where the foreign objects are trapped between the displacement regulating part and the spool valve body, it is difficult to completely close the spool valve body. Therefore, the pressurized oil in the hydraulic circuit is leaked to a tank port side of the relief valve, thus making it difficult to stably control pressures of the pressurized oil. In addition, the foreign object that has been trapped once cannot be discharged even by flow of the hydraulic oil. As a result, in some cases the foreign object remains between the displacement regulating part and the spool valve body in a state of adhering thereto, creating a possibility that a pressure setting function by the relief valve is damaged.

In view of the above-discussed problems with the conventional art, it is an object of the present invention to provide a relief valve that can suppress trap of foreign objects to stably perform setting of a relief pressure.

(1) For solving the aforementioned problems, the present invention is applied to a relief valve comprising: a valve casing provided with a supply passage for supplying pressurized oil to a hydraulic actuator and a spool sliding bore that opens in the halfway position of the supply passage; a tank port that is formed in the valve casing in such a manner as to be communicated with the spool sliding bore and is connected to a tank; a spool valve body that is provided to be inserted and fitted in the spool sliding bore in the valve casing and is subjected to pressures in the supply passage to axially slide and displace, thereby opening/closing the supply passage to the tank port; a displacement regulating part that is provided in the valve casing to be positioned in an axial one side of the spool sliding bore exposed to the supply passage to regulate a stroke end of the spool valve body at the time the spool valve body slides and displaces in the spool sliding bore in a closing direction; and a valve spring that is provided in the spool sliding bore to be positioned in an axial other side of the spool valve body and axially urges the spool valve body toward the displacement regulating part, thus, setting a valve opening pressure of the spool valve body as a relief pressure, wherein when the spool valve body opens against the valve spring, an axial gap is formed between an end surface of the spool valve body in the axial one side and the displacement regulating part.
The configuration adopted by the present invention is characterized in that a recess shaped pressure receiving part, one side of which opens and the other side of which closes, is provided in the axial one side of the spool valve body for receiving pressures in the supply passage and a radial hole is provided to extend to radially penetrate through a peripheral wall of the pressure receiving part to radially communicate an inside and an outside of the pressure receiving part; an annular gap is formed between an inner peripheral surface of one side of the spool sliding bore adjacent to the displacement regulating part and an outer periphery of the peripheral wall of the pressure receiving part, the annular gap extending in a circumferential direction therebetween for a hydraulic oil to flow therein at the opening of the spool valve body; and/or at the opening of the spool valve body, a first oil passage in which the hydraulic oil flows to the tank port from the supply passage through the pressure receiving part and the radial hole and a second oil passage in which the hydraulic oil flows to the tank port through the axial gap and the annular gap, are formed.

With this arrangement, the pressurized oil in the supply passage can be discharged to the tank port through the first oil passage and the second oil passage at the opening of the spool valve body. At this time, in the second oil passage side, the pressurized oil in the supply passage flows to the tank port through the axial gap and the annular gap between the displacement regulating part and the spool valve body. Therefore, even if the trap of the foreign object occurs between the one end surface of the spool valve body and the displacement regulating part, the hydraulic oil (pressurized oil) flowing from the axial gap to the annular gap can discharge the foreign object in such a manner as to be washed away to the tank port side. As a result, it is possible to prevent occurrence of a state where the foreign object remains between the displacement regulating part and the spool valve body in a state of adhering thereto to stably maintain the pressure setting function of the relief valve. That is, when the excessive pressure is generated in the supply passage, the excessive pressure can be relieved to the tank port side to suppress generation of the excessive pressure.

(2) According to the present invention, a back pressure chamber is formed in the spool sliding bore to be positioned in the axial other side of the spool valve body for subjecting the spool valve body to a back pressure, a gap dimension of the axial gap at the opening of the spool valve body is in advance determined by a spring force of the valve spring and a pressure in the back pressure chamber, and a radial gap dimension of the annular gap is set to be larger than the gap dimension of the axial gap.

With this arrangement, the gap dimension (that is, lift amount) of the axial gap at the opening of the spool valve body can be in advance determined by the spring force of the valve spring and the pressure in the back pressure chamber. On top of that, in the spool valve body, the radial gap dimension of the annular gap formed in the outer peripheral side of the peripheral wall of the pressure receiving part is set to be larger than the gap dimension of the axial gap. Therefore, when the pressurized oil in the supply passage is discharged to the tank port through the second oil passage, a flow speed of the hydraulic oil can be faster in a position of the axial gap than in a position of the annular gap, and the foreign object can be discharged from the axial gap between the spool valve body and the displacement regulating part with help of the flow of the hydraulic oil at this time. In addition, the foreign object at this time does not stick to the annular gap in the outer peripheral side of the peripheral wall of the pressure receiving part. Therefore, there is no possibility that the foreign object blocks the opening/closing operation of the spool valve body, thus making it possible to stabilize the sliding displacement of the spool valve body.

(3) According to the present invention, the spool valve body is provided with a land part that opens/closes the supply passage to the tank port when the spool valve body axially slides/displaces in the spool sliding bore, wherein at the opening of the spool valve body, when an axial opening dimension with which the land part opens to the tank port is indicated at (C), a relation of a radial gap dimension (A) of the annular gap, a gap dimension (B) of the axial gap, and the opening dimension (C) is set to B<A≤C.

With this arrangement, the axial opening dimension (C) with which the land part of the spool valve body opens to the tank port is set equal to or more than the gap dimension (A) of the annular gap, and the gap dimension (B) of the axial gap is set to be smaller than the gap dimension (A) of the annular gap. Therefore, when the pressurized oil in the supply passage is discharged to the tank port through the second oil passage, the foreign object that passes through the axial gap between the spool valve body and the displacement regulating part with help of the flow of the hydraulic oil in the second oil passage has no possibility of sticking or being trapped in the halfway position of the route until it is discharged from the tank port, thus making it possible to smoothly discharge the foreign object.

(4) According to the present invention, the spool valve body is provided with a land part that opens/closes the supply passage to the tank port when the spool valve body axially slides/displaces in the spool sliding bore, a notch communicated with the radial hole is provided in the land part of the spool valve body, wherein the notch forms a part of the first oil passage and the second oil passage at the opening of the spool valve body.

With this arrangement, by providing the notch communicated with the radial hole to the land part of the spool valve body, freedom of design can be increased in view of adjusting an opening area of the tank port to the sliding displacement (movement) amount of the spool valve body. Therefore, even if the foreign object is trapped into the spool valve body, the notch can secure the minimum pressure even in a case where the supply passage of the pressurized oil is communicated with the tank port.

(5) According to the present invention, the displacement regulating part is provided with an annular tapered surface obliquely inclined in a part thereof which a one-side end surface of the spool valve body in an axial direction makes contact with. With this arrangement, the annular tapered surface formed in the displacement regulating part can reduce a contact area between the spool valve body and the displacement regulating part when the one-side end surface of the spool valve body makes contact with the displacement regulating part. This configuration can reduce the possibility (that is, trap risk) that the trap of the foreign object is generated between the contacting parts of both.

BRIEF DESCRIPTION OF THE DRAWINGS

Fig. 1 is a longitudinal sectional view showing a relief valve according to a first embodiment of the present invention together with a driving hydraulic circuit of a fan motor.

Fig. 2 is an enlarged longitudinal sectional view showing the relief valve in Fig. 1 in an opening state.

Fig. 3 is a longitudinal sectional view showing a relief valve in an opening state according to a second embodiment.

Fig. 4 is an enlarged sectional view showing a relief valve in a closing state according to a third embodiment.

Fig. 5 is an enlarged sectional view showing a relief valve in a closing state according to a fourth embodiment.

Fig. 6 is an enlarged sectional view showing a relief valve in an opening state according to a fifth embodiment.

MODE FOR CARRYING OUT THE INVENTION

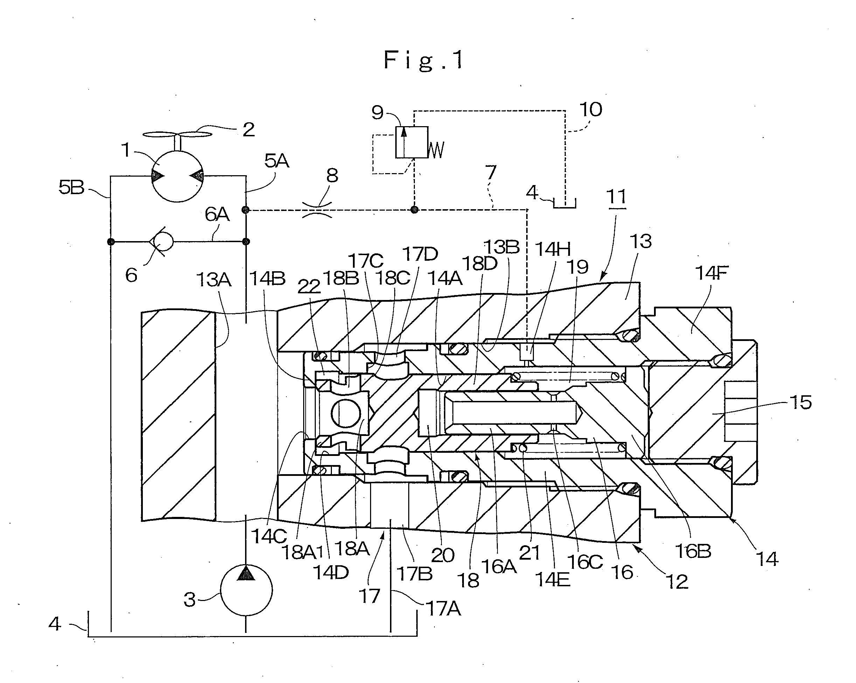

Hereinafter, a relief valve according to an embodiment of the present invention will be in detail explained with reference to the accompanying drawings of Fig. 1 to Fig. 6 by taking a case where the relief valve is applied to a drive circuit of a fan motor as an example.

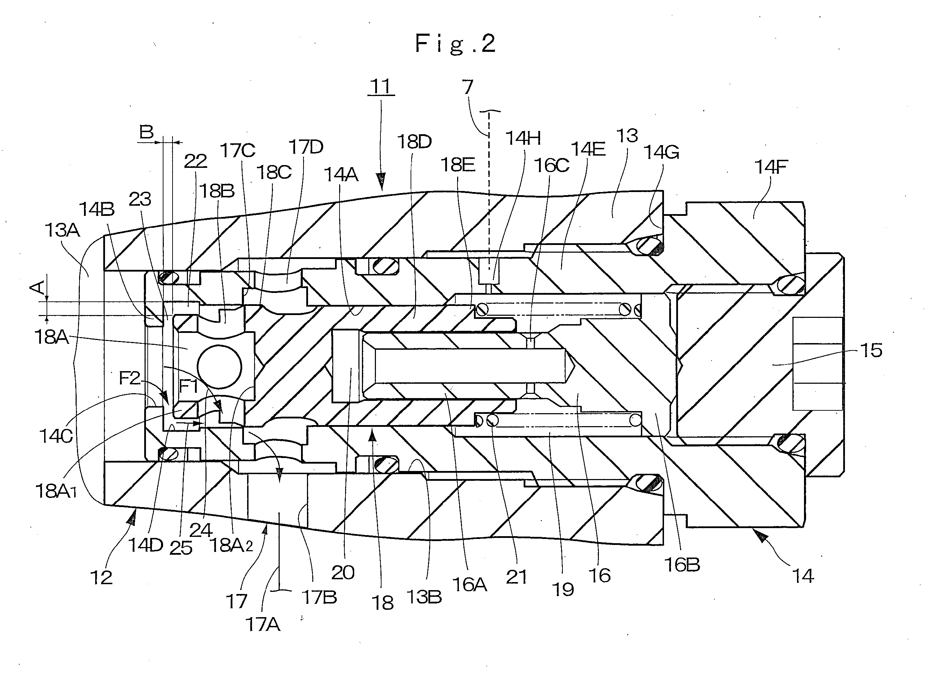

Here, Fig. 1 and Fig. 2 show a relief valve according to a first embodiment of the present invention.

In the figures, indicated at 1 is a fan motor as a hydraulic actuator, and the fan motor 1 is composed of a hydraulic motor to drive a cooling fan 2 for rotation. A construction machine which is a typical example of a hydraulic excavator is provided with heat exchangers, such as a radiator for cooling cooling water of an engine, an oil cooler for cooling hydraulic oil (none of them are shown). The cooling fan 2 supplies cooling air to these heat exchangers.

It should be noted that the heat exchangers provided in the construction machine are not limited to the above radiator and oil cooler, and may include, for example, an intercooler attached to a supercharger of an engine, a condenser for condensing a coolant for air conditioner, a fuel cooler for cooling fuel to be supplied to an engine, and the like. That is, the heat exchanger as a cooling target to which cooling air from the cooling fan 2 is supplied includes at least one or more of the above radiator, oil cooler, condenser, and fuel cooler.

A hydraulic pump 3 forms a hydraulic source together with a tank 4. The hydraulic pump 3 is driven/rotated by a diesel engine (not shown) as a prime mover of the construction machine, and the like, and sucks the hydraulic oil in the tank 4 and delivers the pressurized oil to a main line 5A which will be described later. The fan motor 1 is driven/rotated by the pressurized oil supplied from the hydraulic pump 3.

A pair of main lines 5A, 5B connect the fan motor 1 to the hydraulic pump 3 and the tank 4. The main line 5A that is one of these main lines 5A, 5B forms a line in a high-pressure side connecting the fan motor 1 and the hydraulic pump 3, and the other main line 5B forms a line in a low-pressure side connecting the fan motor 1 and the tank 4. The fan motor 1 discharges the pressurized oil supplied from the main line 5A-side to the main line 5B-side, and rotational speed thereof increase/decreases in proportion to a supply/discharge amount (flow amount of the pressurized oil) at this time.

A check valve 6 is provided through a short-circuit line 6A between the main lines 5A, 5B to be in parallel to the fan motor 1. The check valve 6 stops the pressurized oil from flowing in the short-circuit line 6A in one direction (that is, from the main line 5A-side to the main line 5B) and allows the hydraulic oil to flow in a reverse direction (from the main line 5B-side to the main line 5A). Therefore, even in a case where the main line 5A-side that is originally in a high pressure side has a tendency to be negative or clogging of a distribution line in the main line 5B-side is generated and the like, the check valve 6 opens, thereby making it possible to avoid the event that the fan motor 1 is damaged.

A branch line 7 is branched from the main line 5A in the high pressure side. The branch line 7 is connected at the front end side to a back pressure chamber 19 of the relief valve 11 to be described later. A throttle 8 and a pilot relief valve 9 are provided in the halfway position of the branch line 7. The pilot relief valve 9 adjusts a pressure in the branch line 7 to a predetermined setting pressure in a position that is downstream of the throttle 8.

That is, when the pressure in the branch line 7 exceeds the setting pressure, the pilot relief valve 9 opens to relieve the pressure in the branch line 7 (a part of the pressurized oil) to the tank line 10-side. Therefore, a back pressure corresponding to the setting pressure is supplied to the back pressure chamber 19 of the relief valve 11 to be described later. It should be noted that the pilot relief valve 9 may be formed of a variable relief valve using a solenoid. In this case, the setting pressure of the pilot relief valve 9 can variably be adjusted in accordance with rated output, a kind or the like of the fan motor 1.

On the other hand, the throttle 8 provides a throttling function to the pressurized oil flowing in the branch line 7 toward the pilot relief valve 9 to generate a large pressure difference in forward and rearward of the throttle 8. Therefore, the pressure in the main line 5A is set to a pressure higher by a pressure amount corresponding to the pressure difference as compared to a back pressure in the back pressure chamber 19 of the relief valve 11 to be described later.

Next, an explanation will be made of the relief valve 11 for the fan motor 1 adopted in the first embodiment.

This relief valve 11 opens when a pressure of the pressurized oil delivered from the hydraulic pump 3 reaches the predetermined relief setting pressure (that is, relief pressure) to release the excessive pressure exceeding this relief pressure to the tank 4-side for relief. The relief valve 11 comprises a valve casing 12 to be described later (the valve casing 12 is a general term for a casing body 13, a stepped sleeve 14, a plug 15 and a valve guide 16), a spool valve body 18 and a valve spring 21.

The valve casing 12 forms a body of the relief valve 11. The valve casing 12 comprises a casing body 13 forming an outer shell of the relief valve 11, the stepped sleeve 14 and the plug 15 which will be described later. The casing body 13 is provided with a supply passage 13A of the pressurized oil that forms a part of the main line 5A, and a valve mounting hole 13B that opens in the halfway position of the supply passage 13A and to which the stepped sleeve 14 to be described later is threaded and mounted. The valve mounting hole 13B is formed of a through hole extending in a direction substantially perpendicular to the supply passage 13A. That is, the valve mounting hole 13B has an axial one side (main line 5A-side, that is, inside of the relief valve 11) that opens to be exposed to the supply passage 13A and an axial other side (part away from the main line 5A, that is, outside of the relief valve 11) that opens to an outer side surface of the casing body 13.

The stepped sleeve 14 is removably provided to be threaded into the valve mounting hole 13B from outside of the casing body 13. As shown in Fig. 1 and Fig. 2, the stepped sleeve 14 closes the valve mounting hole 13B of the casing body 13 from an axial outside together with the plug 15. The stepped sleeve 14 is formed as a stepped cylindrical body that is gradually enlarged in diameter from the axial one side to the axial other side. An inner peripheral surface of the stepped sleeve 14 is provided with a circular spool sliding bore 14A to which the spool valve body 18 to be described later is inserted and fitted.

The stepped sleeve 14 is provided with a displacement regulating part 14B in an axial one side exposed to the supply passage 13A, and the displacement regulating part 14B is formed as an annular projection projecting radially inward from a one-side end of the stepped sleeve 14. The displacement regulating part 14B forms a valve seat regulating a stroke end when the spool valve body 18 to be described later slides/displaces in the spool sliding bore 14A in a closing direction. That is, the spool valve body 18 makes contact with the displacement regulating part 14B to be held in the closing position. The inner peripheral surface of the displacement regulating part 14B is provided with an opening part 14C regularly communicating with the supply passage 13A.

In addition, the stepped sleeve 14 has a one-side inner periphery that is provided with an enlarged diameter hole part 14D adjacent to a depth side (outside) of the displacement regulating part 14B. The enlarged diameter hole part 14D forms an annular gap 22 between the enlarged diameter hole part 14D and the spool valve body 18 to be described later. The enlarged diameter hole part 14D is formed to have an axial dimension as large as possible, and opposes at least partially radially to a radial hole 18B which will be described later also at the opening of the spool valve body 18.

The stepped sleeve 14 has an axial intermediate part that is provided with a fixed cylinder part 14E threaded into the valve mounting hole 13B of the casing body 13 for mount. The fixed cylinder part 14E of the stepped sleeve 14 is fixed in the valve mounting hole 13B of the casing body 13 in a liquid-tight state. The fixed cylinder part 14E of the stepped sleeve 14 is provided with an annular groove 17C and a communicating hole 17D to be described later in a position closer to an axial one side. The fixed cylinder part 14E of the stepped sleeve 14 holds the supply passage 13A in a state of being shut to the tank port 17 to be described later when the spool valve body 18 is in a closing state.

On the other hand, the stepped sleeve 14 has an axial other side that is provided with a projecting cylinder part 14F projecting outside of the casing body 13. The projecting cylinder part 14F has an outer side surface that is formed in a hexagonal shape or square shape. When the stepped sleeve 14 is threaded into the valve mounting hole 13B, a tool such as a wrench (not shown) is engaged to the projecting cylinder part 14F. An annular step part 14G that in a liquid-tight state makes contact with an end surface of the casing body 13 is formed between the projecting cylinder part 14F and the fixed cylinder part 14E of the stepped sleeve 14.

Further, the fixed cylinder part 14E of the stepped sleeve 14 is provided with a radial oil hole 14H formed therein to be communicated with the back pressure chamber 19 to be described later. The oil hole 14H is connected to a front end side of the branch line 7. Here, the oil hole 14H functions also as an orifice hole providing a throttling function to the hydraulic oil when the hydraulic oil from the branch line 7 flows into the back pressure chamber 19 or the hydraulic oil flows out from the back pressure chamber 19.

The plug 15 forms a part of the valve casing 12. The plug 15 is provided to be threaded into an inner peripheral side of the projecting cylinder part 14F of the stepped sleeve 14 from outside for mount. The plug 15 forms a plug body that closes the projecting cylinder part 14F of the stepped sleeve 14 to the outside. Here, the plug 15 has a front end surface (end surface of an axial one side) that makes contact with the valve guide 16 to be described later and has a function for variably adjusting a spring force of the valve spring 21 to be described later. That is, the spring force of the valve spring 21 is adjusted by changing an engagement position of the plug 15 to the projecting cylinder part 14F to axially move the valve guide 16 in the stepped sleeve 14 (spool sliding bore 14A).

The valve guide 16 is provided in the stepped sleeve 14 in such a manner as to be capable of displacing therein. The valve guide 16 axially guides the spool valve body 18 to be described later in the spool sliding bore 14A to stabilize an opening/closing operation (that is, axial sliding displacement) of the spool valve body 18. Here, the valve guide 16 has an axial one side that forms a guide cylinder part 16A for guiding the spool valve body 18 and axial other side that acts as a spring receiving part 16B receiving the spring force of the valve spring 21 to be described later. The valve guide 16 has an axial intermediate part that is provided with a radial oil hole 16C securing inflow and outflow of the hydraulic oil into and from a damping chamber 20 to be described later.

The tank port 17 is formed in the valve casing 12 to be communicated with the spool sliding bore 14A. The tank port 17 comprises a port hole 17B that extends in a radial direction of the valve mounting hole 13B to be formed in the casing body 13 and to be connected to the tank 4 through a tank line 17A, an annular groove 17C that is formed on an inner peripheral surface of the stepped sleeve 14 and extends in the entire periphery, and a plurality of communicating holes 17D formed in a radial direction of the stepped sleeve 14 to communicate the annular groove 17C with the port hole 17B.

Here, the annular groove 17C of the tank port 17 is arranged to the axial other side in a position (position closer to the axial one side of the fixed cylinder part 14E) to be separated by a predetermined dimension from the displacement regulating part 14B and the enlarged diameter hole part 14D in the stepped sleeve 14. When the spool valve body 18 to be described later axially slides and displaces, the annular groove 17C of the tank port 17 is communicated/shut with/from the supply passage 13A (that is, radial hole 18B to be described later) by the land part 18C to be described later.

The spool valve body 18 is provided to be inserted/fitted in the spool sliding bore 14A of the stepped sleeve 14. The spool valve body 18 receives a pressure in the supply passage 13A by the pressure receiving part 18A to be described later to axially slide/displace against the valve spring 21. Thereby, the spool valve body 18 (that is, land part 18C to be described later) opens/closes the supply passage 13A to the tank port 17.

Here, the spool valve body 18 has an axial one side that is provided with the pressure receiving part 18A formed in a recess shape for receiving a pressure in the supply passage 13A. As shown in Fig. 2, the pressure receiving part 18A is formed in the recess shape by an annular cylinder part 18A1 composed of a cylindrical peripheral wall and a bottom part 18A2. That is, the annular cylinder part 18A1 of the pressure receiving part 18A has an axial one side that opens to axially oppose the opening part 14C of the displacement regulating part 14B and an axial other side that is provided with the bottom part 18A2 to be closed.

The annular cylinder part 18A1 of the pressure receiving part 18A is provided with a total of four radial holes 18B that radially extend to penetrate through an axial intermediate part of the peripheral wall. Each of the radial holes 18B is formed as a through hole for radially communicating an inside and an outside of the pressure receiving part 18A. It should be noted that the number of the radial holes 18B is not limited to four, but may be, for example, one to three or more than five.

The spool valve body 18 has an outer peripheral side that is provided with the annular land part 18C. The land part 18C is arranged in a position that is a radial outside to the bottom part 18A2 of the pressure receiving part 18A. The land part 18C opens/closes the pressure receiving part 18A and the radial hole 18B to the annular groove 17C of the stepped sleeve 14 in such a manner as to communicate/shut between the supply passage 13A and the tank port 17 when the spool valve body 18 axially displaces in the spool sliding bore 14A.

The spool valve body 18 has an axial other side that is provided with a bottomed cylinder part 18D therein to which a valve guide 16-side opens. The bottomed cylinder part 18D is formed in a cylindrical shape to axially extend in the spool sliding bore 14A. The bottomed cylinder part 18D is inserted/fitted in such a manner that the inner peripheral surface makes slide contact with an outer peripheral surface of a guide cylinder part 16A of the valve guide 16. The bottomed cylinder part 18D has the other end part that acts as a spring receiving part 18E for receiving a spring force of the valve spring 21 to be described later.

The back pressure chamber 19 is formed in the spool sliding bore 14A of the stepped sleeve 14. The back pressure chamber 19 is an annular oil chamber formed between the bottomed cylinder part 18D of the spool valve body 18 and the valve guide 16. The back pressure chamber 19 is connected to the branch line 7 through the oil hole 14H of the stepped sleeve 14, and is regularly communicated with the damping chamber 20 to be described later through the oil hole 16C of the valve guide 16.

As a result, the pressurized oil in the branch line 7 set in pressure by the pilot relief valve 9 is supplied to the back pressure chamber 19 (including the damping chamber 20) through the oil hole 14H. Therefore, in the spool valve body 18, the pressure in the back pressure chamber 19 (including the damping chamber 20) is applied to the bottomed cylinder part 18D-side as a back pressure operating in a valve closing direction by a predetermined pressure.

The damping chamber 20 is formed between the guide cylinder part 16A of the valve guide 16 and the bottomed cylinder part 18D of the spool valve body 18. The damping chamber 20 is regularly communicated with the back pressure chamber 19 through the oil hole 16C of the valve guide 16. The damping chamber 20 together with the back pressure chamber 19 applies the back pressure to the spool valve body 18, and when the spool valve body 18 slides/displaces in an opening/closing direction, the throttling function by the oil holes 14H and 16C gradually alleviates(damps) the movement of the spool valve body 18.

The valve spring 21 regularly urges the spool valve body 18 in a closing direction. The valve spring 21 is positioned in the spool sliding bore 14A (back pressure chamber 19) and is arranged in a contracted state (that is, preset state) between the spring receiving part 16B of the valve guide 16 and the spring receiving part 18E of the spool valve body 18. The valve spring 21 urges the annular cylinder part 18A1 of the spool valve body 18 in such a manner as to be pushed on the displacement regulating part 14B of the stepped sleeve 14, and sets an opening pressure of the spool valve body 18 as a relief pressure.

The annular gap 22 is formed between the enlarged diameter hole part 14D (one side of the spool sliding bore 14A) adjacent to the displacement regulating part 14B of the stepped sleeve 14 and the annular cylinder part 18A1 of the pressure receiving part 18A. A shown in Fig. 2, the annular gap 22 is formed with a radial gap dimension A, and extends over an entire circumference in the circumferential direction between the inner peripheral surface of the enlarged diameter hole part 14D and the outer peripheral surface of the annular cylinder part 18A1. At the opening of the spool valve body 18, the hydraulic oil flows in the annular gap 22 in an arrow F2 direction through the axial gap 23 to be described later.

The axial gap 23 is formed between the displacement regulating part 14B of the stepped sleeve 14B and the annular cylinder part 18A1 at the opening of the spool valve body 18. As shown in Fig. 2, the axial gap 23 has an axial gap dimension B, and this gap dimension B is a dimension corresponding to a lift amount at the opening of the spool valve body 18. That is, the lift amount (gap dimension B) of the spool valve body 18 is in advance determined by a setting pressure (relief adjusting pressure) of the pilot relief valve 9, a pressure receiving area of the bottomed cylinder part 18D to the back pressure chamber 19 (including the damping chamber 20), a spring force of the valve spring 21, a pressure receiving area of the pressure receiving part 18A for receiving the pressure in the supply passage 13A, and the like.

Here, the radial gap dimension A of the annular gap 22 is larger than the gap dimension B of the axial gap 23 at the opening of the spool valve body 18, and is set to meet the following formula 1. In other words, the stepped sleeve 14 (spool sliding bore 14A) has a one-side inner periphery that is provided with the enlarged diameter hole part 14D to meet formula 1.

[Formula 1]

$$A > B$$

As shown in Fig. 2, at the opening of the spool valve body 18, a first oil passage 24 in which the hydraulic oil flows to the tank port 17 in an arrow F1 direction through the pressure receiving part 18A of the spool valve body 18 and each radial hole 18B from the supply passage 13A of the valve casing 12, and a second oil passage 25 in which the hydraulic oil flows to the tank port 17 in an arrow F2 direction through the axial gap 23 and the annular gap 22 between the displacement regulating part 14B of the stepped sleeve 14 and the spool valve body 18, are formed.

The relief valve 11 applied to the drive circuit of the fan motor 1 according to the first embodiment has the aforementioned configuration, and next, the operation will be explained.

First, when the hydraulic pump 3 is driven/rotated by a prime mover (not shown) such as a diesel engine, the hydraulic oil in the tank 4 is sucked in the hydraulic pump 3, and a high-pressure pressurized oil is delivered into the main line 5A. That is, the pressurized oil from the hydraulic pump 3 is supplied to the fan motor 1 through the main line 5A, and the returned oil is discharged to the tank 4 through the main line 5B.

Thereby, the fan motor 1 drives/rotates the cooling fan 2 to supply cooling air to heat exchangers (for example, radiator, oil cooler, and the like) of the construction machine from the cooling fan 2. A rotational speed of the fan motor 1 is increased/decreased in proportion to a flow amount of the pressurized oil flowing through the main lines 5A, 5B, and is determined by the setting pressure of the pilot relief valve 9 (relief adjusting pressure) and the relief setting pressure of the relief valve 11.

Incidentally, in some cases foreign objects such as chips or abrasion powder by cutting work are mixed into the pressurized oil (that is, hydraulic oil) flowing in the hydraulic circuit. These foreign objects are easily trapped between the spool valve body 18 (annular cylinder part 18A1) of the relief valve 11 and the displacement regulating part 14B of the stepped sleeve 14. In a case where the foreign objects are trapped between the displacement regulating part 14B and the spool valve body 18, it is difficult to completely close the spool valve body 18. Therefore, there is a possibility that the pressurized oil in the hydraulic circuit is leaked to the tank port 17-side of the relief valve 11, thus making it difficult to stably control pressures of the pressurized oil.

Therefore, according to the first embodiment, there are provided the recess shaped pressure receiving part 18A, one side of which opens and the other side of which closes, is provided in the axial one side of the spool valve body 18 for receiving pressures in the supply passage 13A, the radial hole 18B extends to radially penetrate through the peripheral wall (annular cylinder part 18A1) of the pressure receiving part 18A to radially communicate an inside and an outside of the pressure receiving part 18A. The annular gap 22 is formed between one side (that is, enlarged diameter hole part 14D) of the spool sliding bore 14A adjacent to the displacement regulating part 14B and the outer periphery of the annular cylinder part 18A1, the annular gap 22 extending in a circumferential direction therebetween for the hydraulic oil to flow therein at the opening of the spool valve body 18. In the relief valve 11, when the spool valve body 18 opens against the valve spring 21, the axial gap 23 is formed between the annular cylinder part 18A1 of the spool valve body 18 and the displacement regulating part 14B of the stepped sleeve 14.

On top of that, at the opening of the spool valve body 18, the first oil passage 24 in which the hydraulic oil flows in an arrow F1 direction to the tank port 17 from the supply passage 13A through the pressure receiving part 18A and the radial hole 18B and the second oil passage 25 in which the hydraulic oil flows in an arrow F2 direction to the tank port 17 through the axial gap 23 and the annular gap 22 between the displacement regulating part 14B and the spool valve body 18 (annular cylinder part 18A1).

Therefore, the relief valve 11 can discharge the pressurized oil in the supply passage 13A to the tank port 17 through the first oil passage 24 and the second oil passage 25 at the opening of the spool valve body 18. At this time, regarding the second oil passage 25, the pressurized oil in the supply passage 13A flows in an arrow F2 direction to the tank port 17 through the axial gap 23 and the annular gap 22.

Therefore, even if the trap of the foreign object occurs between the annular cylinder part 18A1 of the spool valve body 18 and the displacement regulating part 14B, the hydraulic oil (pressurized oil) flowing in an arrow F2 direction from the axial gap 23 to the annular gap 22 can discharge the foreign object in such a manner as to be washed away to the tank port 17-side. As a result, there is no possibility that the foreign object remains between the displacement regulating part 14B and the spool valve body 18 (annular cylinder part 18A1) in a state of adhering thereto, making it possible to stably maintain the pressure setting function of the relief valve 11. That is, when the excessive pressure is generated in the supply passage 13A, the excessive pressure can be relieved to the tank port 17-side to suppress generation of the excessive pressure.

In addition, the relief valve 11 adopted by the first embodiment can in advance determine the gap dimension B (that is, lift amount) of the axial gap 23 at the opening of the spool valve body 18 by the spring force of the valve spring 21 and the pressure in the back pressure chamber 19 (damping chamber 20). On top of that, in the spool valve body 18, the radial gap dimension A of the annular gap 22 formed in the outer peripheral side of the annular cylinder part 18A1 is set to be larger than the gap dimension B of the axial gap 23 as shown in the above formula 1.

Therefore, when the pressurized oil in the supply passage 13A is discharged in an arrow F2 direction to the tank port 17 through the second oil passage 25, the flow speed of the hydraulic oil can be faster in a position of the axial gap 23 than in a position of the annular gap 22. The foreign object can be discharged from the axial gap 23 between the spool valve body 18 (annular cylinder part 18A1) and the displacement regulating part 14B with help of the flow of the hydraulic oil at this time. In addition, the foreign object at this time does not stick in the annular gap 22 in the outer peripheral side of the annular cylinder part 18A1 of the pressure receiving part 18A. Therefore, there is no possibility that the foreign object blocks the opening/closing operation of the spool valve body 18, thus making it possible to stabilize the sliding displacement of the spool valve body 18.

Accordingly, the relief valve 11 adopted in the first embodiment adopts the aforementioned configuration, and thereby, it is possible to suppress the trap of the foreign object in the axial gap 23 between the spool valve body 18 (annular cylinder part 18A1) and the displacement regulating part 14B. This prevents generation of the excessive pressure to stably perform setting of the relief pressure by the relief valve 11.

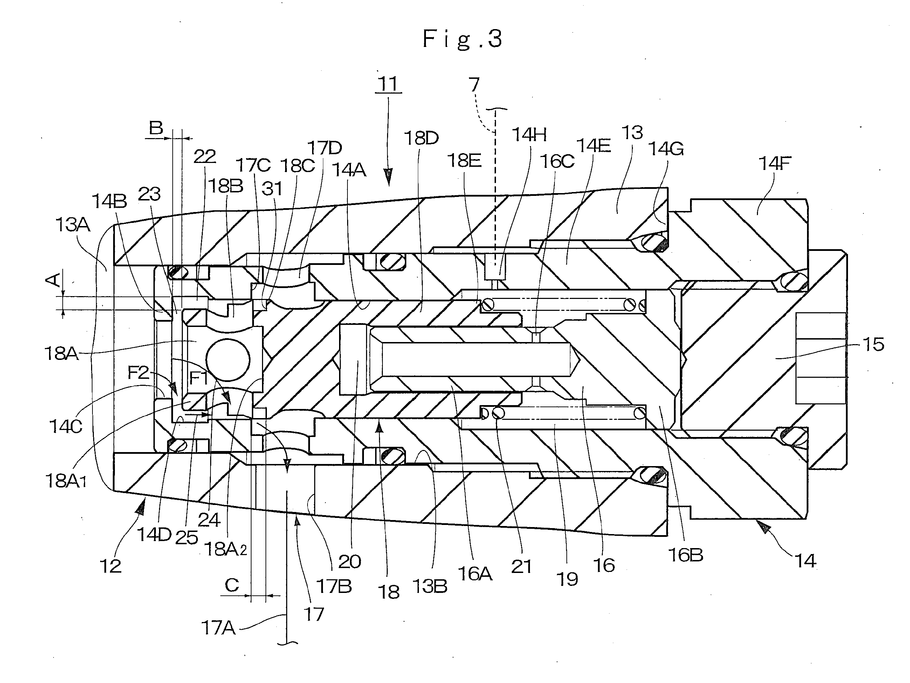

Next, Fig. 3 shows a relief valve according to a second embodiment of the present invention. In the second embodiment, the component elements that are identical to those of the foregoing first embodiment will be simply denoted by the same reference numerals to avoid repetitions of similar explanations. The second embodiment is characterized in that opening groove parts 31 are provided in the land part 18C of the spool valve body 18 to meet a relation by formula 2 to be described later.

The plural opening groove parts 31 adopted by the second embodiment are formed by partially cut out the land part 18C of the spool valve body 18, and are provided in the land part 18C. The opening groove parts 31 may be notches provided in the land part 18C. That is, each of the opening groove parts 31 is formed in the spool valve body 18 having a predetermined dimension axially and circumferentially, and is also formed with a predetermined groove depth (dimension) in a radial direction of the spool valve body 18. At the opening of the spool valve body 18, an axial opening dimension with which the land part 18C opens to the annular groove 17C of the tank port 17 is set to a dimension C shown in Fig. 3 by the opening groove part 31.

Here, a radial gap dimension A of the annular gap 22, a gap dimension B of the axial gap 23, and an axial opening dimension C of the land part 18C by the opening groove part 31 are set with a relationship to meet the following formula 2. That is, the radial gap dimension A of the annular gap 22 is larger than the gap dimension B of the axial gap 23. On the other hand, each of the gap dimension A and the gap dimension B is set to a dimension equal to or less than the opening dimension C to the axial opening dimension C of the land part 18C by the opening groove part 31.

[Formula 2]

$$B < A \leq C$$

The land part 18C by the opening groove part 31 is set to meet the relation of formula 2, and thereby, at the opening the axial opening dimension C with which the land part 18C opens to the annular groove 17C of the tank port 17 is a dimension larger than the gap dimension B of the axial gap 23. Therefore, also at the closing of the spool valve body 18 (that is, a state where the annular cylinder part 18A1 makes contact with the displacement regulating part 14B of the stepped sleeve 14), the land part 18C continues to open slightly to the annular groove 17C of the tank port 17 by the opening groove part 31.

Therefore, the pressurized oil in the supply passage 13A is discharged to the tank port 17-side through the opening groove part 31 also at the closing of the spool valve body 18. However, it is possible to adjust a hydraulic oil amount (discharge amount of the hydraulic oil) at this time as needed in accordance with a shape of the opening groove part 31. Therefore, it is possible to hold the pressure in the supply passage 13A (main line 5A) to a desired pressure (that is, pressure necessary for driving/rotating the fan motor 1).

Thus, the second embodiment configured in this manner can also suppress the trap of the foreign object in the axial gap 23 between the spool valve body 18 (annular cylinder part 18A1) and the displacement regulating part 14B, and can obtain the effect substantially similar to that of the first embodiment. Particularly, in the second embodiment, the axial opening dimension C with which the land part 18C of the spool valve body 18 opens to the tank port 17 is set to a dimension equal to or more than the radial gap dimension A of the annular gap 22.

Therefore, at the opening of the spool valve body 18, when the pressurized oil in the supply passage 13A is discharged to the tank port 17 through the second oil passage 25, the foreign object passes through the axial gap 23 between the spool valve body 18 (annular cylinder part 18A1) and the displacement regulating part 14B by the flow in the arrow F2 direction. As a result, there is no possibility that the foreign object sticks or is trapped in the halfway position of the route until it is discharged from the tank port 17 (namely, the oil passage 25), thus making it possible to smoothly discharge the foreign object.

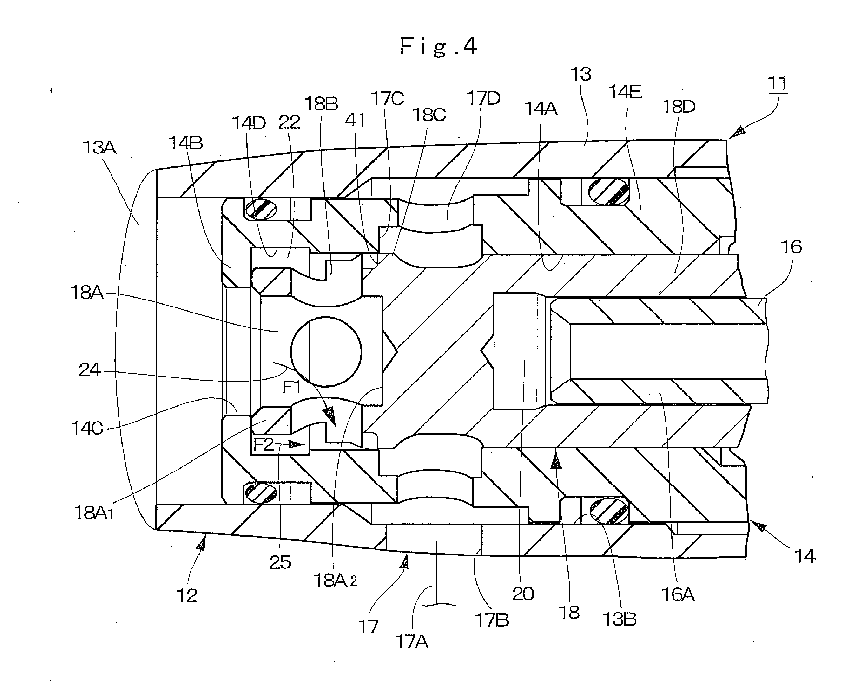

Next, Fig. 4 shows a third embodiment of the present invention. The third embodiment is characterized in that notches are provided in a land part of a spool valve body to communicate with a radial hole. In the third embodiment, the component elements that are identical to those of the foregoing first embodiment will be simply denoted by the same reference numerals to avoid repetitions of similar explanations.

A plurality of notches 41 are formed in the land part 18C of the spool valve body 18. These notches 41 are formed of notches each having a triangle or square shape in section, and are communicated with the respective radial holes 18B of the spool valve body 18. That is, each of the notches 41 adopted by the third embodiment is formed by partially notching the land part 18C of the spool valve body 18. Each of the notches 41 is formed in the spool valve body 18 having a predetermined dimension axially and circumferentially, and is also formed with a predetermined groove depth (dimension) in a radial direction of the spool valve body 18.

As shown in Fig. 4, in a case where the spool valve body 18 in a closing state moves in an opening direction (that is, direction where the annular cylinder part 18A1 is away from the displacement regulating part 14B), first the notch 41 of the spool valve body 18 is communicated with the annular groove 17C of the tank port 17. When the spool valve body 18 further moves in an opening direction, the radial hole 18B of the spool valve body 18 is directly communicated with the tank port 17 (the annular groove 17C formed in the stepped sleeve 14). Each of the notches 41 forms a part of the first oil passage 24 and the second oil passage 25 at the opening of the spool valve body 18.

Therefore, by providing the notch 41 to the land part 18C of the spool valve body 18, a relation of a sliding displacement (movement) amount of the spool valve body 18 and an opening area of the annular groove 17C of the tank port 17 can be widely set. Therefore, even if the trap of the foreign object is generated, the relief valve 11 can secure the minimum pressure (that is, pressure necessary for driving/rotating the fan motor 1).

Thus, the third embodiment configured in this manner can also suppress the trap of the foreign object between the spool valve body 18 (annular cylinder part 18A1) and the displacement regulating part 14B, and can obtain the effect substantially similar to that of the first embodiment. Particularly, in the third embodiment, the notch 41 communicated with the radial hole 18B is provided in the land part 18C of the spool valve body 18.

Thereby, freedom of design can be increased in view of adjusting the opening area of the tank port 17 to the sliding displacement (movement) amount of the spool valve body 18. Therefore, even if the foreign object is trapped into the spool valve body 18, the notch 41 provided in the land part 18C can secure the minimum pressure even in a case where the supply passage 13A of the pressurized oil is communicated with the tank port 17 through the land part 18C.

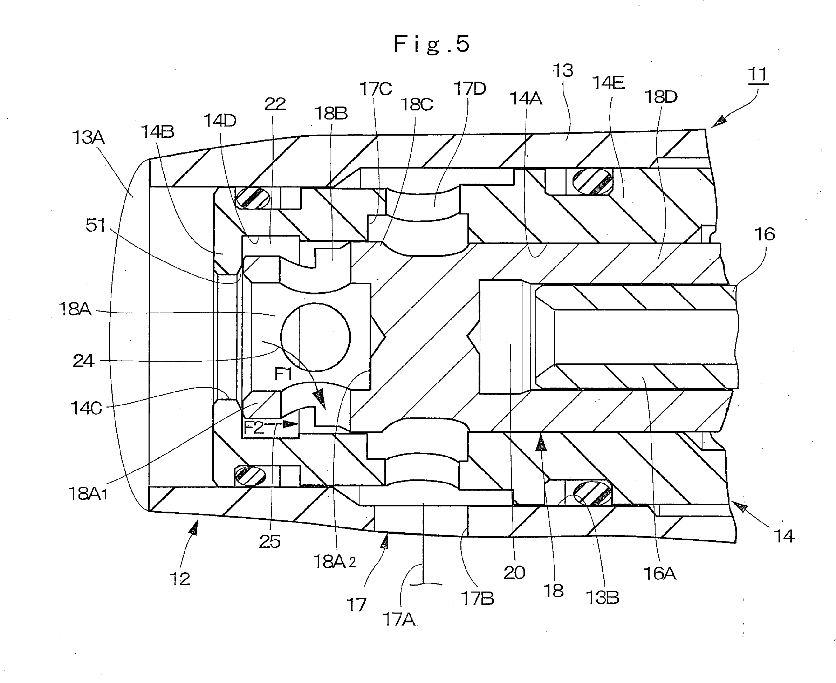

Next, Fig. 5 shows a fourth embodiment of the present invention. The fourth embodiment is characterized in that a displacement regulating part of a stepped sleeve is provided with an annular tapered surface. In the fourth embodiment, the component elements that are identical to those of the foregoing first embodiment will be simply denoted by the same reference numerals to avoid repetitions of similar explanations.

The annular tapered surface 51 adopted by the fourth embodiment is formed in a part positioned in the periphery of the opening part 14C in the displacement regulating part 14B of the stepped sleeve 14. That is, the tapered surface 51 is formed as a surface obliquely inclined in the part which an end surface of the spool valve body 18 (that is, a front end of the annular cylinder part 18A1) in the axial one side makes contact with the displacement regulating part 14B of the stepped sleeve 14.

The tapered surface 51 is configured such that a contact area of the annular cylinder part 18A1 to the displacement regulating part 14B is reduced and the contact of both becomes a line contact (or a state close to a line contact). This configuration can reduce the possibility that the foreign object is trapped between the displacement regulating part 14B and the annular cylinder part 18A1.

Thus, the fourth embodiment configured in this manner can also suppress the trap of the foreign object between the spool valve body 18 (annular cylinder part 18A1) and the displacement regulating part 14B, and can obtain the effect substantially similar to that of the first embodiment. Particularly, in the fourth embodiment, the annular tapered surface 51 is formed in the displacement regulating part 14B of the stepped sleeve 14.

Therefore, the annular tapered surface 51 formed in the displacement regulating part 14B can reduce the contact area when the end surface of the spool valve body 18 (that is, annular cylinder part 18A1) in the axial one side makes contact with the displacement regulating part 14B. This configuration can reduce the possibility (that is, trap risk) that the trap of the foreign object between the contacting parts of both is generated.

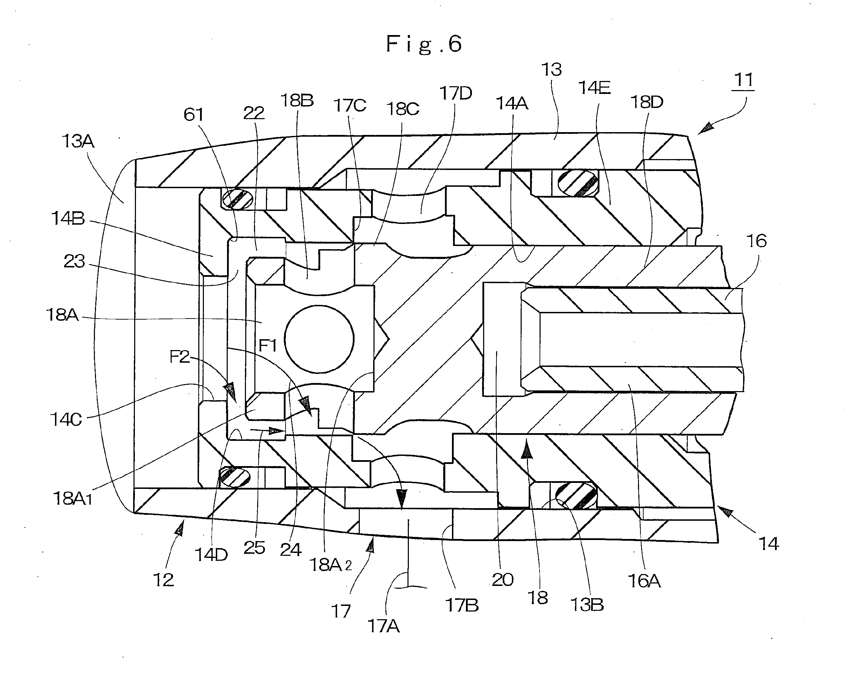

Next, Fig. 6 shows a fifth embodiment of the present invention. The fifth embodiment is characterized in making a flow of a hydraulic oil along an inner peripheral surface of a stepped sleeve smooth at the opening of a spool valve body. In the fifth embodiment, the component elements that are identical to those of the foregoing first embodiment will be simply denoted by the same reference numerals to avoid repetitions of similar explanations.

A circular arc surface portion 61 is a chamfered part provided between the displacement regulating part 14B of the stepped sleeve 14 and the enlarged diameter hole part 14D. The circular arc surface portion 61 is formed by providing a circular arc shaped chamfer to a corner part between the displacement regulating part 14B and the enlarged diameter hole part 14D. When the spool valve body 18 opens as shown in Fig. 6, a flow of the pressurized oil in an arrow F2 direction can be made smooth by the circular arc surface portion 61 when the pressurized oil in the supply passage 13A is discharged to the tank port 17 through the second oil passage 25.

That is, the circular arc surface portion 61 makes the flow of the hydraulic oil in the arrow F2 direction through the axial gap 23 between the spool valve body 18 (annular cylinder part 18A1) and the displacement regulating part 14B a smooth flow along an inner side surface of the displacement regulating part 14B of the stepped sleeve 14 and the enlarged diameter hole part 14D.

Thus, the fifth embodiment configured in this manner can also suppress the trap of the foreign object into the axial gap 23 between the spool valve body 18 (annular cylinder part 18A1) and the displacement regulating part 14B, and can obtain the effect substantially similar to that of the first embodiment. Particularly, in the fifth embodiment, the circular arc surface portion 61 is formed in the corner part between the displacement regulating part 14B and the enlarged diameter hole part 14D in the stepped sleeve 14.

Thereby, the circular arc surface portion 61 can make the flow of the hydraulic oil in the arrow F2 direction at the opening of the spool valve body 18 the smooth flow along the inner side surface of the displacement regulating part 14B and the enlarged diameter hole part 14D in the stepped sleeve 14. Therefore, even if the foreign object is trapped between the annular cylinder part 18A1 and the displacement regulating part 14B, the foreign object easily runs on the flow of the hydraulic oil in the arrow F2 direction that has passed through the axial gap 23, making it possible to discharge the foreign object to the tank port 17-side. That is, even in a case where the foreign object is trapped into the axial gap 23, when the foreign object is discharged with this flow of the hydraulic oil in the arrow F2 direction of the second oil passage 25, the foreign object can be smoothly guided in the arrow F2 direction by the circular arc surface portion 61, thus making it possible to easily discharge the foreign object.

It should be noted that the fifth embodiment is explained by taking a case where the circular arc surface portion 61 is formed in the corner part between the displacement regulating part 14B and the enlarged diameter hole part 14D in the stepped sleeve 14, as an example. However, the present invention is not limited thereto, and a chamfer composed of an obliquely inclined surface may be formed in the corner part between the displacement regulating part 14B and the enlarged diameter hole part 14D.

In addition, the first embodiment is explained by taking a case where the relief valve 11 is applied to the drive circuit of the fan motor 1, as an example. However, the present invention is not limited thereto, and a relief valve may be applied to a circuit for driving a hydraulic actuator including, for example, a working hydraulic cylinder, a traveling hydraulic motor or a revolving hydraulic motor. This respect can be true of the above second to fifth embodiments.

Further, each of the embodiment is explained by taking a case where the valve casing 12 includes the casing body 13 and the stepped sleeve 14, as an example, but the present invention is not limited thereto, and, for example, the valve casing may be formed of a unit member and a supply passage of pressurized oil and a spool sliding bore may be provided in this valve casing. Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

DESCRIPTION OF REFERENCE NUMERALS

| | |
|---|---|
| 1: | Fan motor (Hydraulic actuator) |
| 2: | Cooling fan |
| 3: | Hydraulic pump |
| 4: | Tank |
| 5A, 5B: | Main line |
| 7: | Branch line |
| 8: | Throttle |
| 9: | Pilot relief valve |
| 11: | Relief valve |
| 12: | Valve casing |
| 13: | Casing body |
| 13A: | Supply passage |
| 13B: | Valve mounting hole |
| 14: | Stepped sleeve |
| 14A: | Spool sliding bore |
| 14B: | Displacement regulating part |
| 15: | Plug |
| 16: | Valve guide |
| 17: | Tank port |
| 17C: | Annular groove |
| 18: | Spool valve body |
| 18A: | Pressure receiving part |
| 18A1: | Annular cylinder part (End surface of axial one side) |
| 18A2: | Bottom Part |
| 18B: | Radial hole |
| 18C: | Land part |
| 19: | Back pressure chamber |
| 20: | Damping chamber |
| 21: | Valve spring |
| 22: | Annular gap |
| 23: | Axial gap |
| 24: | First oil passage |
| 25: | Second oil passage |
| 31: | Opening groove part |
| 41: | Notch |
| 51: | Tapered surface |
| 61: | Circular arc surface part (Chamfered part) |
| A: | Radial gap dimension |
| B: | Axial gap dimension |
| C: | Opening dimension |

**Claims**

1. A relief valve comprising:

a valve casing (12) provided with a supply passage (13A) for supplying a pressurized oil to a hydraulic actuator (1) and a spool sliding bore (14A) that opens in the halfway position of said supply passage (13A);
a tank port (17) that is formed in said valve casing (12) in such a manner as to be communicated with said spool sliding bore (14A) and is connected to a tank (4);
a spool valve body (18) that is provided to be inserted and fitted in said spool sliding bore (14A) in said valve casing (12) and is subjected to pressures in said supply passage (13A) to axially slide and displace, thereby opening/closing said supply passage (13A) to said tank port (17);
a displacement regulating part (14B) that is provided in said valve casing (12) to be positioned in an axial one side of said spool sliding bore (14A) exposed to said supply passage (13A) to regulate a stroke end of said spool valve body (18) at the time said spool valve body (18) slides and displaces in said spool sliding bore (14A) in a closing direction; and
a valve spring (21) that is provided in said spool sliding bore (14A) to be positioned in an axial other side of said spool valve body (18) and axially urges said spool valve body (18) toward said displacement regulating part (14B), thus, setting a valve opening pressure of said spool valve body (18) as a relief pressure,
wherein when said spool valve body (18) opens against said valve spring (21), an axial gap (23) is formed between an end surface of said spool valve body (18) in the axial one side and said displacement regulating part (14B), **characterized in that**:

a recess shaped pressure receiving part (18A), one side of which opens and the other side of which closes, is provided in the axial one side of said spool valve body (18) for receiving pressures in said supply passage (13A) and a radial hole (18B) is provided to extend to radially penetrate through a peripheral wall of said pressure receiving part (18A) to radially communicate an inside and an outside of said pressure receiving part (18A);
an annular gap (22) is formed between an inner peripheral surface of one side of said spool sliding bore (14A) adjacent to said displacement regulating part (14B) and an outer periphery of the peripheral wall of said pressure receiving part (18A), said annular gap (22) extending in a circumferential direction therebetween for a hydraulic oil to flow therein at the opening of said spool valve body (18); and
at the opening of said spool valve body (18), a first oil passage (24) in which the hydraulic oil flows to said tank port (17) from said supply passage (13A) through said pressure receiving part (18A) and said radial hole (18B) and a second oil passage (25) in which the hydraulic oil flows to said tank port (17) through said axial gap (23) and said annular gap (22), are formed.

2.  The relief valve according to claim 1, wherein
    a back pressure chamber (19) is formed in said spool sliding bore (14A) to be positioned in the axial other side of said spool valve body (18) for subjecting said spool valve body (18) to a back pressure,
    a gap dimension (B) of said axial gap (23) at the opening of said spool valve body (18) is in advance determined by a spring force of said valve spring (21) and a pressure in said back pressure chamber (19), and
    a radial gap dimension (A) of said annular gap (22) is set to be larger than the gap dimension (B) of said axial gap (23).

3.  The relief valve according to claim 1, wherein
    said spool valve body (18) is provided with a land part (18C) that opens/closes said supply passage (13A) to said tank port (17) when said spool valve body (18) axially slides/displaces in said spool sliding bore (14A), wherein
    at the opening of said spool valve body (18), when an axial opening dimension with which said land part (18C) opens to said tank port (17) is indicated at (C), a relation of a radial gap dimension (A) of said annular gap, a gap dimension (B) of said axial gap, and said opening dimension (C) is set to B<A≤C.

4.  The relief valve according to claim 1, wherein
    said spool valve body (18) is provided with a land part (18C) that opens/closes said supply passage (13A) to said tank port (17) when said spool valve body (18) axially slides/displaces in said spool sliding bore (14A),
    a notch (41) communicated with said radial hole (18B) is provided in said land part (18C) of said spool valve body (18),
    wherein said notch (41) forms a part of said first oil passage (24) and said second oil passage (25) at the opening of said spool valve body (18).

5.  The relief valve according to claims 1, 2, 3 or 4, wherein
    said displacement regulating part (14B) is provided with an annular tapered surface (51) obliquely inclined in a part thereof which a one-side end surface of said spool valve body (18) in an axial direction makes contact with.

Fig.1

Fig.2

EP 2 837 832 A1

Fig.3

Fig.4

Fig.5

EP 2 837 832 A1

Fig.6

Europäisches
Patentamt

European
Patent Office

Office européen
des brevets

**EUROPEAN SEARCH REPORT**

Application Number

EP 14 17 7006

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2012 017800 A (AISIN SEIKI) 26 January 2012 (2012-01-26) * figures 1-9 * | 1-5 | INV. F15B13/02 F16K17/06 |
| A | US 2010/078085 A1 (KUROKAWA YOSHITAKA [JP] ET AL) 1 April 2010 (2010-04-01) * figures 1-9C * | 1 | |
| A | FR 2 202 248 A1 (BANDSTAHLKOMBINAT MATERN VEB [DD]) 3 May 1974 (1974-05-03) * figures 1,2 * | 1 | |
| A | DE 10 2010 019044 A1 (GERAETE UND PUMPENBAU GMBH DR EUGEN SCHMIDT [DE] GERÄTE UND PUMPENBAU) 3 November 2011 (2011-11-03) * figures 1-5 * | 1 | |

TECHNICAL FIELDS
SEARCHED (IPC)

F15B
F16K
F16H

The present search report has been drawn up for all claims

| Place of search | Date of completion of the search | Examiner |
|---|---|---|
| Munich | 12 January 2015 | Heneghan, Martin |

EPO FORM 1503 03.82 (P04C01)

## ANNEX TO THE EUROPEAN SEARCH REPORT
## ON EUROPEAN PATENT APPLICATION NO.

EP 14 17 7006

This annex lists the patent family members relating to the patent documents cited in the above-mentioned European search report.
The members are as contained in the European Patent Office EDP file on
The European Patent Office is in no way liable for these particulars which are merely given for the purpose of information.

12-01-2015

| Patent document cited in search report | | Publication date | Patent family member(s) | | Publication date |
|---|---|---|---|---|---|
| JP 2012017800 | A | 26-01-2012 | JP | 5598706 B2 | 01-10-2014 |
| | | | JP | 2012017800 A | 26-01-2012 |
| US 2010078085 | A1 | 01-04-2010 | JP | 5078957 B2 | 21-11-2012 |
| | | | JP | 2010107036 A | 13-05-2010 |
| | | | US | 2010078085 A1 | 01-04-2010 |
| FR 2202248 | A1 | 03-05-1974 | DE | 2338519 A1 | 18-04-1974 |
| | | | FR | 2202248 A1 | 03-05-1974 |
| | | | HU | 167990 B | 28-02-1976 |
| DE 102010019044 | A1 | 03-11-2011 | CN | 103180612 A | 26-06-2013 |
| | | | DE | 102010019044 A1 | 03-11-2011 |
| | | | EP | 2567095 A2 | 13-03-2013 |
| | | | JP | 2013534986 A | 09-09-2013 |
| | | | US | 2013081720 A1 | 04-04-2013 |
| | | | WO | 2011137890 A2 | 10-11-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005069352 A
- JP 2010261366 A